# EUROPEAN PATENT APPLICATION

(11) **EP 4 778 757 A1**
(43) Date of publication of application: **22.07.2026**
(21) Application number: 25222913.3
(22) Date of filing: 12.12.2025
(51) Int. Cl.: B60K 15/04, B60K 15/05

(54) **INLET BOX UNIT**

(30) Priority: 15.01.2025 JP 2025005773
(71) Applicant: Minebea AccessSolutions Inc., Miyazaki-shi, Miyazaki 880-0293 (JP)
(72) Inventor: KOZAKI, Hironori, Miyazaki, 880-0293 (JP); MERA, Hirofumi, Miyazaki, 880-0293 (JP)
(74) Representative: Leihkauf, Steffen Falk

(57) **Abstract**

An inlet box (100) unit includes a housing (10) including an opening (3h), a lid (1) attached to the housing (10) and configured to be movable between a fully closed position in which the opening is closed and a fully opened position in which the opening (3) is opened, a drain hole portion (7) formed in the housing (10), and a drain pipe (6) retained by the drain hole portion (7). The drain hole portion (7) includes a hole wall portion (8), and a fitting groove (9) into which the drain pipe (6) is fitted is formed in the hole wall portion (8).

## Description

### BACKGROUND

### Technical Field

The present invention relates to an inlet box unit.

### Background Art

WO 2012/049956 discloses a fuel filler opening structure, which is supported by a vehicle body and prevents water from entering the filler opening. The fuel filler opening structure includes a fuel lid, which openably and closably covers an opening formed on a side body of the vehicle body, and an elastic body supported by the vehicle body. The elastic body is formed with a drain hole portion for draining rainwater, car wash water or the like, and a drain pipe is attached to the drain hole portion.

In the configuration disclosed in WO 2012/049956, there is a possibility that the retention of the drain pipe is insufficient, and that a part for firmly retaining the drain pipe is required separately.

### SUMMARY

An object of the present invention is to provide an inlet box unit capable of more securely retaining the drain pipe without increasing the number of parts.

An aspect of the present invention provides an inlet box unit, which includes a housing including an opening, a lid attached to the housing and configured to be movable between a fully closed position in which the opening is closed and a fully opened position in which the opening is opened, a drain hole portion formed in the housing, and a drain pipe retained by the drain hole portion. The drain hole portion includes a hole wall portion and a fitting groove into which the drain pipe is fitted is formed in the hole wall portion.

The above configuration forms the fitting groove into which the drain pipe fits by the hole wall portion of the drain hole portion, thereby retaining the drain pipe more securely. Further, the drain hole portion forms the fitting groove into which the drain pipe fits, thereby has a function of retaining the drain pipe in addition to functioning as a hole for draining water. Thus, it is not necessary to separately provide a component for retaining the drain pipe, and thus an increase in the number of components can be avoided. In other words, the drain pipe can be retained more securely without increasing the number of components.

According to the present invention, the drain pipe can be retained more securely without increasing the number of components.

### Brief Description of Drawings

FIG. 1 is a partial sectional view of a vehicle to which an inlet box unit according to an embodiment is applied.
FIG. 2 is a front side perspective view illustrating a closed state of an inlet box unit according to an embodiment.
FIG. 3 is a front side perspective view illustrating an open state of an inlet box unit according to an embodiment.
FIG. 4 is a front side exploded perspective view of an inlet box unit according to an embodiment.
FIG. 5 is a rear side exploded perspective view of an inlet box unit according to an embodiment.
FIG. 6A is a rear perspective view of an inlet box unit according to an embodiment.
FIG. 6B is an enlarged view of the vicinity of the drain hole portion illustrated in FIG. 6A.
FIG. 7A is a cross-sectional view of the drain hole portion illustrated in FIG. 3 taken along a YZ plane.
FIG. 7B is a cross-sectional view in which the drain pipe illustrated in FIG. 7A is omitted.
FIG. 8A is an enlarged view illustrating the vicinity of the drain hole portion illustrated in FIG. 3.
FIG. 8B is an enlarged view in which the drain pipe illustrated in FIG. 8A is omitted.
FIG. 9A is a rear perspective view of the inlet box unit viewed from an angle different from FIG. 6A.
FIG. 9B is an enlarged view illustrating the vicinity of the drain hole portion illustrated in FIG. 9A.
FIG. 10 illustrates a method of attaching a drain pipe to a drain hole portion according to an embodiment.
FIG. 11 illustrates a method of attaching a drain pipe to a drain hole portion according to a modified example.
FIG. 12 illustrates a method of attaching a drain pipe to a drain hole portion according to another modified example.

### DETAILED DESCRIPTION

Hereinafter, an inlet box unit 100 of an embodiment will be described with reference to the drawings. Note that the same elements or corresponding elements are denoted by the same reference signs throughout the drawings, and overlap of the detailed description thereof will be omitted.

In the present embodiment, the inlet box unit 100 is attached to the rear side (door panel) of a vehicle 200. Hereinafter, a vehicle longitudinal direction, a vehicle width direction, and a vehicle height direction, of the vehicle 200 are referred to as X, Y, Z, respectively. Then, the front side of the vehicle longitudinal direction X is referred to as "front side X1", and the rear side X2 as "rear side X2". The outer side of the vehicle width direction Y is referred to as "outer side Y1", and the inner side as "inner side Y2". The upper side of the vehicle height direction Z is referred to as "upper side Z1", and the lower side as "lower side Z2". In the present embodiment, the vehicle height direction Z is a direction along the vertical direction.

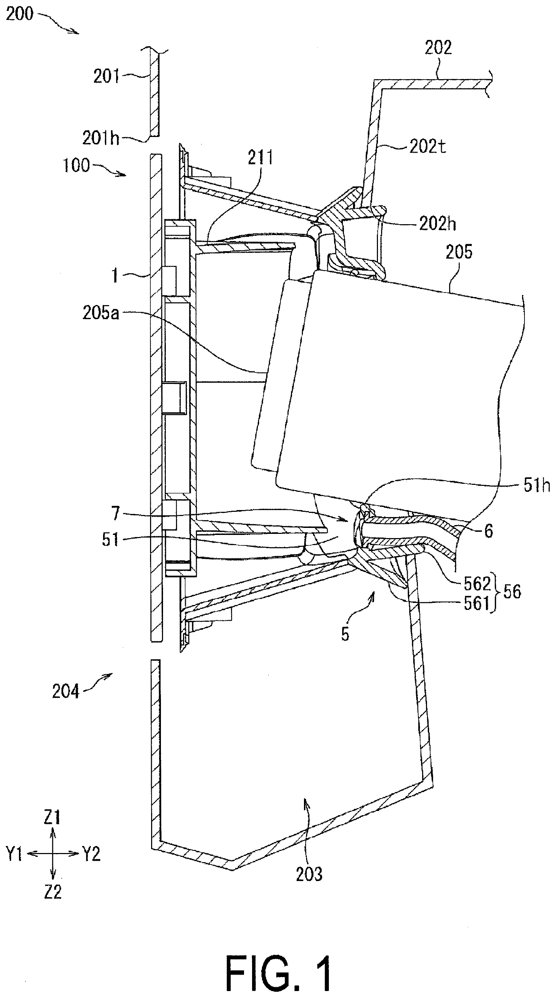

FIG. 1 is a partial sectional view of the vehicle 200 to which the inlet box unit 100 according to an embodiment of the present invention is applied.

As illustrated in FIG. 1, the vehicle 200 includes an outer panel 201 and an inner panel 202.

The outer panel 201 is a flat member made of a metal material such as a steel plate or an aluminum alloy, and constitutes an appearance of the vehicle. An outer opening 201h is formed in the outer panel 201. In the present embodiment, the plate thickness direction of the outer panel 201 is parallel to the vehicle width direction Y.

The inner panel 202 is composed of a flat member made of a metal material such as a steel plate or an aluminum alloy. The inner panel 202 includes an opposing wall portion 202t disposed opposite to the outer panel 201 in the vehicle width direction Y, and an inner opening 202h is formed in the opposing wall portion 202t. The inner side Y2 of the inner panel 202 defines, for example, a rear space in which a rear tire (not illustrated) further included in the vehicle 200 is accommodated.

The inlet box unit 100 is disposed in an internal space 203 defined between the outer panel 201 and the inner panel 202. More specifically, the inlet box unit 100 is fitted into the inner opening 202h and assembled to the vehicle 200 such that a portion thereof is exposed to the outside of the vehicle via the outer opening 201h of the outer panel 201. Hereinafter, a portion of the vehicle 200, to which the inlet box unit 100 is assembled, is referred to as a mounting portion 204. In the present embodiment, the inlet box unit 100 is mounted to the vehicle 200 such that the outer side Y1 is on the front side. However, the mounting position and mounting orientation of the inlet box unit 100 to the vehicle 200, can be appropriately changed.

The vehicle 200 further includes a drive source and a supply member 205 for supplying an energy source for driving the vehicle to the drive source. The supply member 205 is arranged so that one end 205a of the supply member 205 is positioned inside the inlet box unit 100 via the insertion hole 51h.

For example, when the drive source of the vehicle 200 is an internal combustion engine, the energy source is fuel (gasoline), and the supply member 205 is a pipe through which the fuel can flow. For example, when the driving source of the vehicle 200 is an electric motor, the energy source is electricity (electric power), and the supply member 205 is an electric wire including a connector.

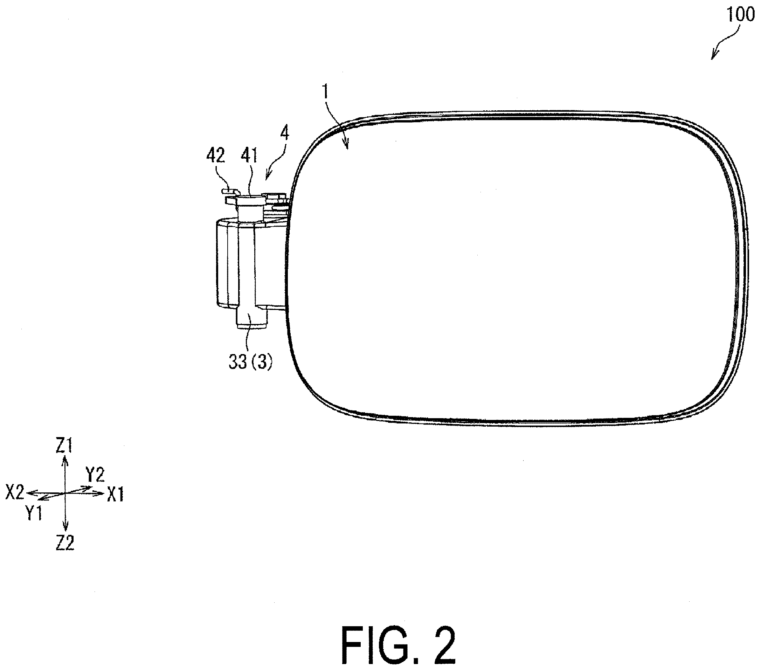

The configuration of the inlet box unit 100 will be described with reference to FIGS. 2 to 6B.

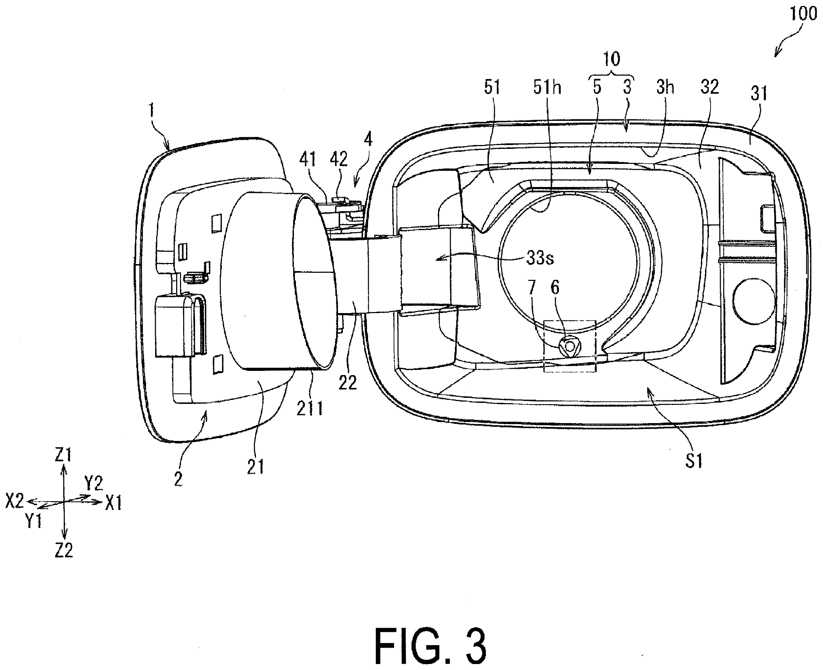

As illustrated in FIGS. 2 to 4, the inlet box unit 100 includes a lid 1. As illustrated in FIGS. 3 to 4, the inlet box unit 100 includes a hinge portion 2, a box body 3, a shaft support member 4, a box support portion 5, a drain pipe 6, and a drain hole portion 7.

### (Lid)

The lid 1 is a plate portion member made of the same metal material as the outer panel 201 described with reference to FIG. 1. The lid 1 has a rounded rectangular shape when viewed along the vehicle width direction Y and has an XZ plane intersecting the vehicle width direction Y.

The lid 1 is formed to have a shape similar to and to be slightly smaller than the outer opening 201h of the outer panel 201 (see FIG. 1).

As illustrated in FIGS. 2 and 3, the lid 1 is attached to the box body 3 rotatably (example of movable action) via the hinge portion 2 and the shaft support member 4. The lid 1 rotates around a rotational axial center along the vehicle height direction Z.

### (Hinge Portion)

As illustrated in FIGS. 3 to 5, the hinge portion 2 includes a plate portion 21 and an arm portion 22. The plate portion 21 has a rounded rectangular shape similar to the outer shape of the lid 1, and has a slightly smaller outer dimension than the lid 1, and is fixed to the lid 1 (see FIG. 3). The plate portion 21 includes an upright portion 211 rising to the inner side Y2.

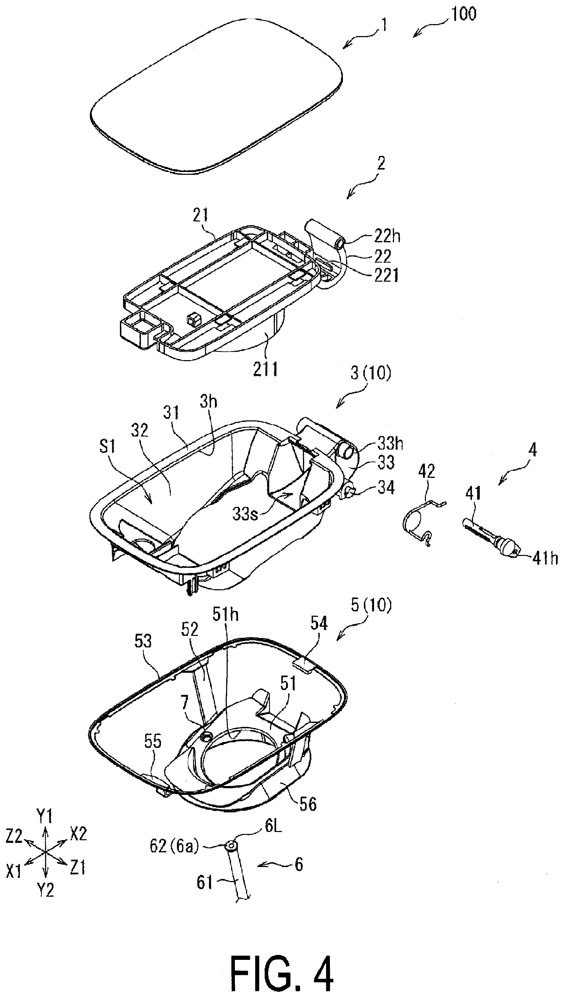

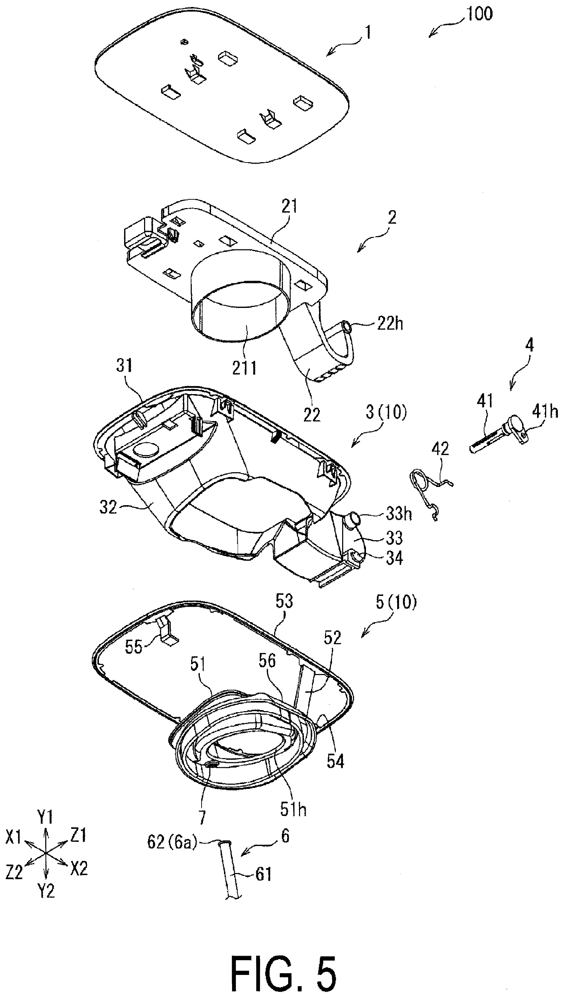

As illustrated in FIGS. 4 and 5, the arm portion 22 is J-shaped as viewed along the vehicle height direction Z, and projects from the short edge of the plate portion 21. The tip end of the arm portion 22 has a cylindrical shape. In the cylindrical tip end of the arm portion 22, an arm shaft hole 22h is formed in which a shaft 41 of the shaft support member 4 is arranged. The arm portion 22 also includes a contact portion 221 that projects toward the plate portion 21 (see FIG. 4).

### (Box Body)

The box body 3 is made of synthetic resin. The box body 3 includes a main body flange portion 31, a peripheral wall portion 32, and a bulged portion 33. The outer shape of the main body flange portion 31 is similar to that of the lid 1 when viewed along the vehicle width direction Y.

The peripheral wall portion 32 has a substantially truncated pyramid shape with both ends open in the vehicle width direction Y, and extends in the direction away from the lid 1 (direction from the outer side Y1 toward the inner side Y2) with the inner edge of the main body flange portion 31 as the base end. The peripheral wall portion 32 has a funnel shape, and as illustrated in FIG. 4, the opposing walls of the peripheral wall portion 32 approach each other as moving away from the main body flange portion 31. In other words, the space surrounded by the peripheral wall portion 32 shrinks as moving away from the main body flange portion 31. Hereinafter, the space surrounded by the peripheral wall portion 32 is referred to as a recess S1, and the outermost side Y1 portion of the recess S1 is referred to as an opening 3h.

The opening 3h is opened or closed by the lid 1. Hereinafter, as illustrated in FIG. 2, the position of the lid 1 at which the opening 3h is fully closed is referred to as a fully closed position, and as illustrated in FIG. 3, the position of the lid 1 at which the opening 3h is fully opened is referred to as a fully opened position. In the open state in which the lid 1 is in the fully opened position, the supply member 205 described with reference to FIG. 1 is exposed via the opening 3h. This can replenish the energy source. On the other hand, in the closed state in which the lid 1 is in the fully closed position, the supply member 205 is covered with the lid 1. In the closed state, the outer surface on the outer side Y1 of the lid 1 is smoothly continuous with the outer surface of the outer panel 201 (see FIG. 1).

As illustrated in FIGS. 4 and 5, the bulged portion 33 projects from the peripheral wall portion 32 in the same direction as the arm portion 22. The bulged portion 33 includes a bulged space 33s, which is configured to be hollow and communicates with the recess S1. The bulged space 33s accommodates the arm portion 22 of the hinge portion 2 (see FIG. 3). The bulged portion 33 includes a bulged shaft hole 33h formed to receive the cylindrical tip of the arm portion 22.

### (Shaft Support Member)

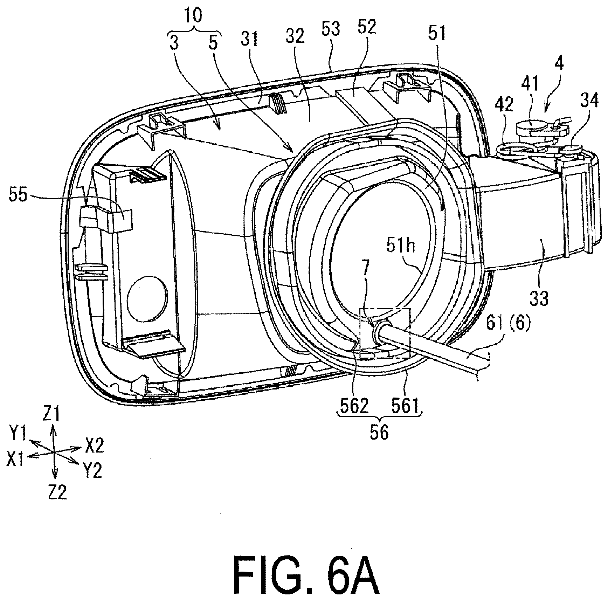

The shaft support member 4 includes the shaft 41 and a spring 42. The shaft 41 is inserted into the arm shaft hole 22h. The spring 42 is, for example, a torsion coil spring, and one end portion of the spring 42 is locked to a locking hole 41h of the shaft 41, and the other end portion of the spring 42 is locked to a locking portion 34 of the bulged portion 33 (see FIG. 6A). This causes the lid 1 and the hinge portion 2 to be rotatable with respect to the box body 3.

### (Box Support Portion)

The box support portion 5 is made of rubber, which is a kind of elastomer (thermosetting resin), and is composed of an elastic member having flexibility (elasticity). The box support portion 5 is arranged so as to cover the box body 3 from the side facing the lid 1 in the vehicle width direction Y, and constitutes a housing 10 of the inlet box unit 100 together with the box body 3. In the present embodiment, the box body 3 and the box support portion 5 are integrally formed simultaneously by so-called two-shot molding.

The box support portion 5 includes a base portion 51, a connection portion 52, a frame portion 53, a restricting piece 54, a locking piece 55, and a lip portion 56 (example of a fitting portion).

The base portion 51 has a main surface intersecting the vehicle width direction Y and faces the lid 1 in the vehicle width direction Y. The main surface of the base portion 51 is inclined so as to be positioned on the inner side Y2 toward one side (front side X1 in the present embodiment) of the vehicle longitudinal direction X. The base portion 51 is in contact with the edge of the inner side Y2 of the peripheral wall portion 32 of the box body 3 and constitutes the bottom of the recess S1 surrounded by the peripheral wall portion 32 of the box body 3.

An insertion hole 51h is formed in the base portion 51 through the base portion 51 to the vehicle width direction Y and through which the supply member 205 described with reference to FIG. 1 is inserted.

The connection portion 52 extends from the base portion 51 to the outer side Y1 in the vehicle width direction Y and connects the base portion 51 to the frame portion 53. The connection portion 52 is arranged along the outer periphery of the peripheral wall portion 32 of the box body 3 (see FIG. 6A).

The frame portion 53 is a frame-shaped member having a shape similar to that of the lid 1, and that of the main body flange portion 31 of the box body 3. The frame portion 53 is arranged along the outer periphery of the main body flange portion 31 of the box body 3 so as to be fitted with the main body flange portion 31 (see FIG. 6A).

The restricting piece 54 extends toward the center of the frame portion 53 (along the vehicle longitudinal direction X) at a position of the frame portion 53, which faces the bulged space 33s of the bulged portion 33 in the vehicle width direction Y as the base end. The restricting piece 54 restricts the lid 1 from rotating more in the open direction beyond the fully open position.

As illustrated in FIGS. 4 and 5, the locking piece 55 locks the box body 3. The locking piece 55 is L-shaped when viewed along the vehicle height direction Z. The locking piece 55 extends from the frame portion 53 to the inner side Y2, and extends from the tip end of the portion extending to the inner side Y2 toward the center of the frame portion 53. As illustrated in FIG. 4, the locking piece 55 is arranged at a position opposed to the restricting piece 54 in the frame portion 53 in the vehicle longitudinal direction X.

As illustrated in FIG. 6A, the lip portion 56 is arranged so as to surround the insertion hole 51h of the base portion 51 at the surface on the inner side Y2 of the base portion 51. The lip portion 56 projects annularly in a direction away from the lid 1 with the base portion 51 as the base end.

The lip portion 56 has a double ring shape and includes an outer peripheral portion 561 and an inner peripheral portion 562. The outer peripheral portion 561 has an annular shape and increases in diameter toward the tip end (inner side Y2). The inner peripheral portion 562 is substantially concentric with the outer peripheral portion 561 and is disposed on the inner side of the outer peripheral portion 561 and on the outer side of the insertion hole 51h. In the present embodiment, the amount of protrusion of the inner peripheral portion 562 toward the inner side Y2 is larger than the amount of protrusion of the outer peripheral portion 561 toward the inner side Y2.

As illustrated in FIG. 1, when the inlet box unit 100 is attached to the vehicle 200, the inner peripheral portion 562 fits into the inner opening 202h of the inner panel 202 (the inner peripheral portion 562 is attached to the inner panel 202 in close contact). This prevents foreign matter such as water from entering. When the inlet box unit 100 is attached to the vehicle 200, the outer peripheral portion 561 abuts on the surface of the outer side Y1 of the inner panel 202 below the inner opening 202h.

### (Drain Pipe)

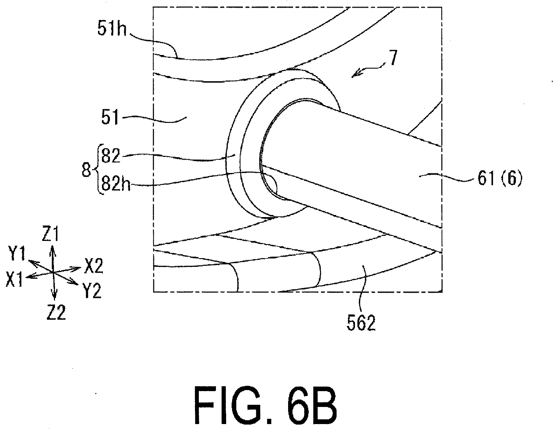

The drain pipe 6 is a tube made of flexible rubber and is retained by the drain hole portion 7 (see FIGS. 6A and 6B).

As illustrated in FIGS. 4 and 5, the drain pipe 6 includes a pipe portion 61 and a pipe flange portion 62. The pipe portion 61 is cylindrical and includes a flow path 6L through which water or the like flows. The pipe flange portion 62 is annular and extends radially to the outer side of the pipe portion 61 with a tip end 6a of the pipe portion 61 as the base end.

### (Drain Hole Portion)

Next, the configuration of the drain hole portion 7 will be described with reference to FIGS. 4 to 9B.

As illustrated in FIG. 4, the drain hole portion 7 is formed at the base portion 51 of the box support portion 5. As illustrated in FIG. 1, the drain hole portion 7 is disposed at the lowest portion of the base portion 51 in a state (orientation) in which the inlet box unit 100 is assembled to the vehicle 200 (vehicle body). This can efficiently discharge (efficiently drain) water entering the housing 10 to the outside of the inlet box unit 100.

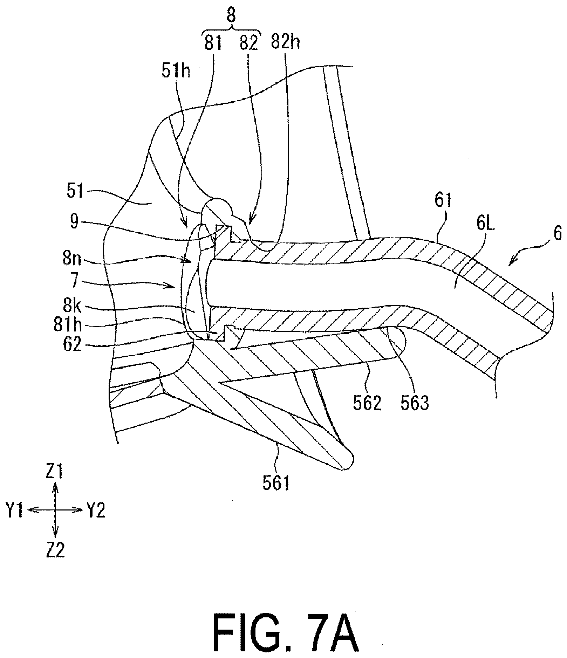

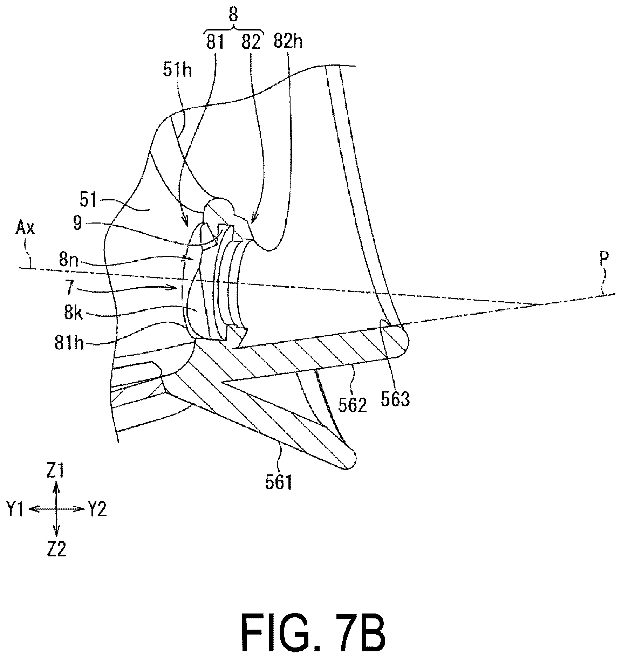

As illustrated in FIGS. 7A and 7B, the drain hole portion 7 includes a hole wall portion 8. The hole wall portion 8 includes a first wall portion 81 and a second wall portion 82. Between the first wall portion 81 and the second wall portion 82 is formed a parting line when the box support portion 5 is molded.

### (First Wall Portion)

The first wall portion 81 is arranged on the outer side Y1 with respect to the second wall portion 82. In the present embodiment, the first wall portion 81 is composed of the base portion 51 in which a part of the base portion 51 has a function as the first wall portion 81.

As illustrated in FIGS. 7A to 8B, the first wall portion 81 is formed with a first drainage hole 81h penetrating the first wall portion 81 in the vehicle width direction Y. The first drainage hole 81h is circular when viewed along the vehicle width direction Y. The first wall portion 81 has an inclined surface 8k (example of an inclined portion) at the outer side Y1. The inclined surface 8k inclines closer to the axial center of the first drainage hole 81h as reaching the inner side Y2. This allows the wall thickness of the first wall portion 81 to be reduced, enabling the mold used to form the box support portion 5 to be demolded without forcing (i.e., without damage due to undercuts, allowing easy removal from the mold).

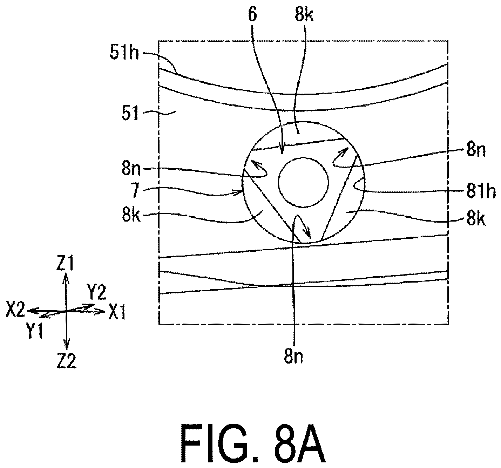

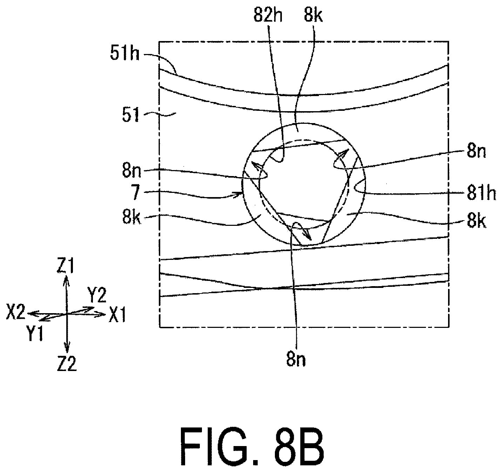

As illustrated in FIGS. 8A and 8B, the first wall portion 81 includes 3 notches 8n. The 3 notches 8n are provided at equal intervals along the circumferential direction of the first drainage hole 81h. As illustrated in FIGS. 7A and 7B, the notches 8n are formed on the wall surface constituting the edge of the first drainage hole 81h of the first wall portion 81. The provision of a notch 8n in the first wall portion 81 facilitates demolding during molding of the box support portion 5. The direction of demolding is parallel to the direction away from the second wall portion 82 (in the present embodiment, the direction is from the inner side Y2 toward the outer side Y1).

As illustrated in FIGS. 6B to 7B, the second wall portion 82 projects in the direction away from the first wall portion 81 with the base portion 51 as the base end. A second drainage hole 82h is formed in the second wall portion 82. The second drainage hole 82h penetrates the second wall portion 82 in the vehicle width direction Y and communicates with the first drainage hole 81h.

As illustrated in FIGS. 8B to 9B, the second drainage hole 82h is circular as viewed along the vehicle width direction Y. The diameter of the second drainage hole 82h is smaller than the diameter of the first drainage hole 81h.

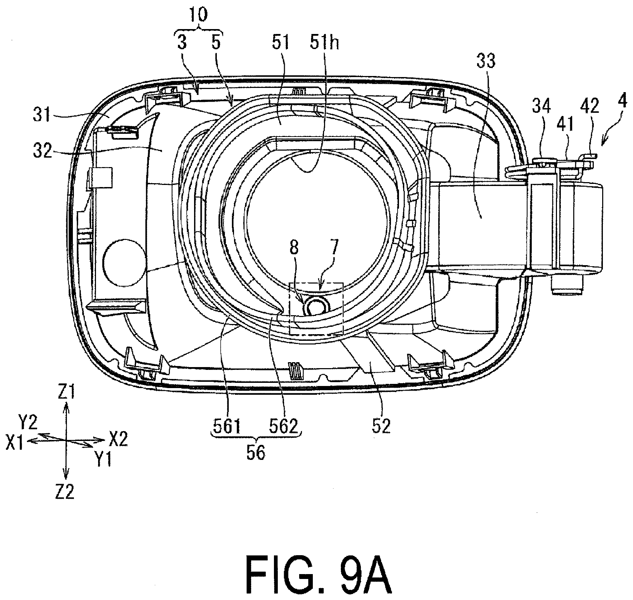

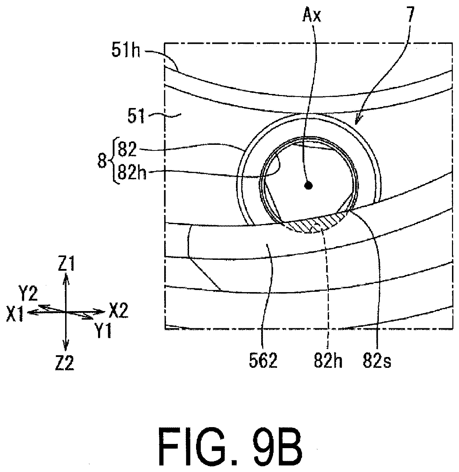

As illustrated in FIGS. 9A and 9B, the inner peripheral portion 562 overlaps a part of the second drainage hole 82h as viewed along an axial center AX of the second drainage hole 82h. Hereinafter, the part of the second drainage hole 82h, which overlaps the inner peripheral portion 562, is referred to as an overlapping portion 82s.

In other words, as illustrated in FIG. 7B, the axial center AX of the second drainage hole 82h intersects at a flat surface P (on an extension line of an abutment surface 563 described later) including the inner side of the inner peripheral portion 562.

### (Fitting Groove)

As illustrated in FIG. 7B, the first wall portion 81 and the second wall portion 82 form a fitting groove 9 into which the drain pipe 6 is fitted. The dimensions and shape of the fitting groove 9 correspond to the pipe flange portion 62, and as illustrated in FIG. 7A, the pipe flange portion 62 of the drain pipe 6 is fitted into the fitting groove 9.

As illustrated in FIG. 6B, the diameter of the pipe portion 61 is slightly smaller than the diameter of the second drainage hole 82h, and the drain pipe 6 is connected to the second drainage hole 82h without a gap. By connecting the drain pipe 6 to the second drainage hole 82h without a gap, the water entering the recess S1 (see FIG. 3) flows into the drain pipe 6 through the first drainage hole 81h and the second drainage hole 82h, and is drained to the outside of the inlet box unit 100 through the drain pipe 6.

### (Method of Attaching Drain Pipe to Drain Hole Portion)

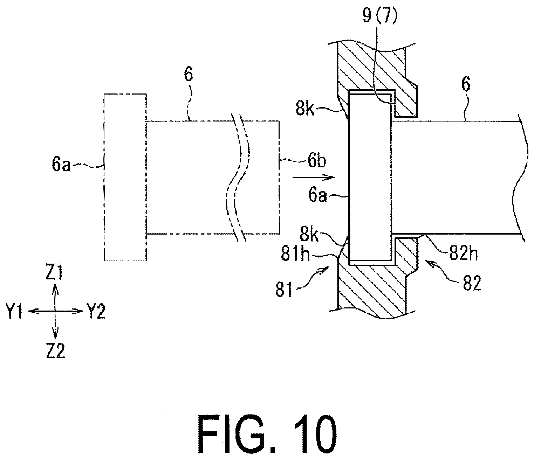

Next, a method (hereinafter referred to as a first attaching method) of attaching the drain pipe 6 to the fitting groove 9 of the drain hole portion 7 will be described with reference to FIG. 10. In the present embodiment, the drain pipe 6 is disposed such that a base end 6b side faces the first drainage hole 81h, and is inserted into the first drainage hole 81h by moving from the outer side Y1 toward the inner side Y2. In the present embodiment, the drain hole portion 7 is formed in the base portion 51 of the box support portion 5 made of an elastic member, so that it is easier to fit the drain pipe 6 to the drain hole portion 7 than when the box support portion 5 is made of, for example, synthetic resin. In addition, the first wall portion 81 includes the inclined surface 8k, and thus when the drain pipe 6 is fitted into the drain hole portion 7, the inclined surface 8k functions as a guide for guiding the drain pipe 6 to the fitting groove 9, thereby improving the assemblability of the drain pipe 6 to the drain hole portion 7.

As described above, the first wall portion 81 and the second wall portion 82 form the fitting groove 9 into which the pipe flange portion 62 of the drain pipe 6 is fitted, and sandwich the pipe flange portion 62 of the drain pipe 6 in the vehicle width direction Y. That is, the drain hole portion 7 can retain the drain pipe 6. That is, the drain hole portion 7 has a function of retaining the drain pipe 6 in addition to functioning as a hole for draining water. Thus, it is not necessary to separately provide components for retaining the drain pipe 6, and thus an increase in the number of components can be avoided. That is, the drain pipe 6 can be retained more securely without increasing the number of components.

In the above embodiment, the drain hole portion 7 is formed in the box support portion 5 composed of an elastic member having flexibility (elasticity), so that the drain pipe 6 can be easily fitted.

In the above embodiment, the inclined surface 8k of the first wall portion 81 functions as a guide for guiding the drain pipe 6 to the fitting groove 9, thereby improving the assemblability of the drain pipe 6 to the drain hole portion 7. Moreover, without damage caused by undercuts, the box support portion 5 can be easily demolded during molding.

In the above embodiment, the first wall portion 81 includes the notches 8n, and thus the box support portion 5 can be easily demolded during molding.

In the above embodiment, the drain hole portion 7 is disposed at the lowest portion of the base portion 51 in a state (orientation) in which the inlet box unit 100 is assembled to the vehicle 200 (vehicle body). This can efficiently discharge water entering the housing 10 to the outside of the inlet box unit 100.

Further, as illustrated in FIG. 7A, when the drain pipe 6 is fitted to the fitting groove 9 of the drain hole portion 7, the inner peripheral portion 562 includes the abutment surface 563 (example of an abutment portion) abutting on the pipe portion 61 of the drain pipe 6. In other words, the pipe portion 61 of the drain pipe 6 is supported by the inner peripheral portion 562 from the lower side Z2 (downward direction) of the vehicle height direction Z. Thus, deformation (drooping) of the drain pipe 6 can be reduced more effectively. As a result, breakage of the pipe flange portion 62 of the drain pipe 6 fitted into the fitting groove 9 can be reduced, and the drain pipe 6 can be retained more securely. In addition, the inner peripheral portion 562 functioning as a fitting portion of the inlet box unit 100 fitted into the vehicle 200 also has a function of retaining the drain pipe 6. Thus, it is not necessary to separately provide components for reducing deformation of the drain pipe 6, and thus an increase in the number of components can be avoided. That is, the drain pipe 6 can be retained more securely without increasing the number of components.

In the above embodiment, as illustrated in FIG. 7A, the inner peripheral portion 562 (abutment surface 563) abuts on the drain pipe 6 at a position separated from the drain hole portion 7. As a result, drooping of the drain pipe 6 can be prevented more effectively than in a configuration in which the inner peripheral portion 562 abuts on the drain pipe 6 at a position (i.e., the root of drain pipe 6) close to the pipe flange portion 62 of the drain pipe 6 fitted to the fitting groove 9 of the drain hole portion 7.

Further, in the present embodiment, the drain hole portion 7 is formed in the box support portion 5 formed of an elastic member. For this reason, compared with the configuration in which the drain hole portion 7 is formed on a member made of hard resin, the retaining portion (first wall portion 81 and second wall portion 82) of the drain hole portion 7 for retaining the drain pipe 6 tends to flex due to the dead weight of the drain pipe 6, and the retaining force for retaining the drain pipe 6 may be inferior. However, as described above, the inner peripheral portion 562 abuts on the drain pipe 6 and supports the drain pipe 6 from the downward direction, so that the drooping of the drain pipe 6 can be reduced, and the load on the first wall portion 81 and the second wall portion 82 can be decreased. This can reduce the deterioration of the retaining force of the drain hole portion 7 for retaining the drain pipe 6. As a result, the drain pipe 6 can be retained more securely.

### (Modified Example)

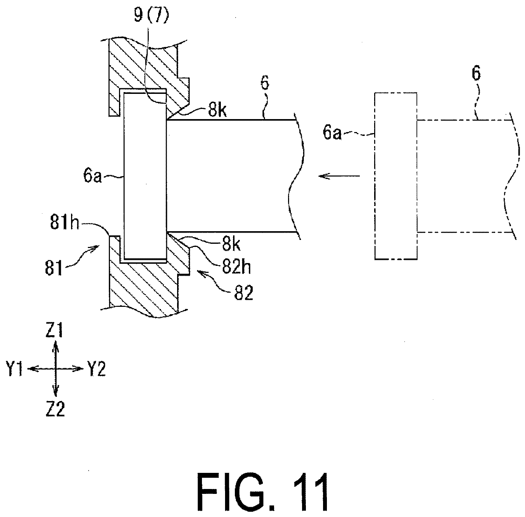

Although the embodiments have been described so far, the above-described configuration can be appropriately modified within the scope of the present invention. For example, although the inclined surface 8k is formed in the outer side Y1 of the first wall portion 81 in the above-described embodiments, the inclined surface 8k may be formed in at least one of the first wall portion 81 and the second wall portion 82. For example, as illustrated in FIG. 11, the inclined surface 8k may be formed on the inner side Y2 of the second wall portion 82. In this case, the drain pipe 6 is disposed such that the tip end 6a side faces the second drainage hole 82h, and is inserted into the second drainage hole 82h and attached to the drain hole portion 7 by moving from the inner side Y2 toward the outer side Y1 (hereinafter referred to as a second attaching method).

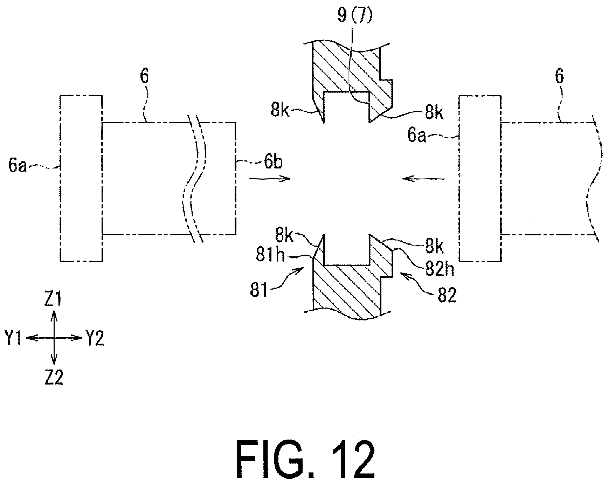

Alternatively, as illustrated in FIG. 12, the inclined surface 8k may be formed on both the outer side Y1 of the first wall portion 81 and the inner side Y2 of the second wall portion 82. In this case, the drain pipe 6 can be attached (fitted) to the drain hole portion 7 by either the first attachment method or the second attachment method.

In the above embodiments, the case in which the box body 3 and the box support portion 5 are composed of 2 pieces (two-shot molding) has been described, but the box body 3 and the box support portion 5 may be composed of 1 piece made of only synthetic resin.

In the above embodiment, the case in which 3 notches 8n are formed on the first wall portion 81 has been described, but the 3 notches 8n may be formed on at least one of the first wall portion 81 and the second wall portion 82, or may be formed only on the second wall portion 82. Alternatively, the 3 notches 8n may be formed on each of the first wall portion 81 and the second wall portion 82.

In the above embodiment, the case in which there are 3 notches 8n has been described, but the number of notches 8n may be any plurality other than three.

In the above embodiments, the case in which the drain hole portion 7 is arranged at the lowest portion of the base portion 51 has been described, but the drain hole portion 7 may not be arranged at the lowest portion of the base portion 51.

In the above embodiment, the inner peripheral portion 562 abuts on the drain pipe 6 at a position away from the drain hole portion 7, but may abut on the drain pipe 6 at a position close to the drain hole portion 7.

In the above embodiments, the case in which the present invention is applied to the inlet box unit 100 in which the lid 1 is rotatable with respect to the housing 10 (box body 3) has been described, but the present invention is also applicable to the inlet box unit 100 in which the lid 1 is slidable (movable) with respect to the housing 10.

## Claims

1. An inlet box unit, comprising:
a housing comprising an opening;
a lid attached to the housing and configured to be movable between a fully closed position in which the opening is closed and a fully opened position in which the opening is opened;
a drain hole portion formed in the housing; and
a drain pipe retained by the drain hole portion,
wherein
the drain hole portion comprises a hole wall portion, and
a fitting groove into which the drain pipe is fitted is formed in the hole wall portion.

2. The inlet box unit according to claim 1, wherein the housing comprises an elastic member, and the drain hole portion is formed in the elastic member.

3. The inlet box unit according to any one of claims 1 to 2, wherein the hole wall portion comprises a first wall portion and a second wall portion that sandwich one end of the drain pipe, the fitting groove is defined by the first wall portion and the second wall portion, and at least one of the first wall portion and the second wall portion comprises an inclined portion.

4. The inlet box unit according to claim 3, wherein a plurality of notches are formed in at least one of the first wall portion and the second wall portion.

5. The inlet box unit according to any one of claims 1 to 4, wherein, in an orientation assembled to a vehicle, the drain hole portion is disposed at the lowest position of the housing.
